# FASCICULE DE BREVET EUROPEEN

(11) **EP 2 244 085 B1**
(45) Date de publication et mention de la délivrance du brevet: **01.04.2015**
(21) Numéro de dépôt: 10160723.2
(22) Date de dépôt: 22.04.2010
(51) Int. Cl.: G01N 21/47, G01J 1/02, G01J 1/04, G01J 1/06, G01J 1/58

(54) **Mesure de la luminance d'une surface de voirie**
Messung der Luminanz einer Fahrbahnoberfläche
Measurement of the luminance of a road surface

(30) Priorité: 23.04.2009 FR 0952654
(43) Date de publication de la demande: 27.10.2010
(73) Titulaire: Roch Service, 95800 Cergy (FR)
(72) Inventeur: Vaudour, Gabriel, 78510 Triel sur Seine (FR); Motz, Didier, 95800 Courdimanche (FR)
(74) Mandataire: Derambure, Christian

(56) Documents cités:
- EP-A2- 1 486 799
- WO-A1-2004/095007
- FR-A1- 2 661 248
- JP-A- 8 238 979
- JP-A- 2009 248 665
- US-A- 4 505 590
- GLENN J ET AL: "CALIBRATION AND USE OF CAMERA-BASED SYSTEMS FOR ROAD LIGHTING ASSESSMENT", INTERNATIONAL JOURNAL OF LIGHTING RESEARCH AND TECHNOLOGY, DIVISION, LONDON, vol. 32, no. 1, 1 janvier 2000 (2000-01-01), pages 33-40, XP009073321, ISSN: 1365-7828

## Description

L'invention est relative à la mesure de la luminance d'une zone de voirie et elle vise plus spécialement un procédé et un véhicule de mesure de la luminance d'une telle zone de voirie.

La voirie dont il est question est une chaussée de circulation de véhicules, une piste cyclable, un trottoir, une zone de stationnement, une place...

La norme européenne EN 13201 sur l'éclairage public établit les prescriptions sur les zones de circulation dans les espaces publics extérieurs dans le but d'assurer la sécurité aux usagers, le bon écoulement du trafic et la protection des biens et des personnes. Cette norme classifie les espaces de circulation, pose les exigences de performance de leur éclairage, expose le calcul des performances et les méthodes de mesure de celles-ci.

L'un des critères de performance à prendre en compte dans certaines occurrences est la luminance. Ce paramètre peut être défini comme l'intensité lumineuse d'une source lumineuse dans une direction donnée, divisée par l'aire apparente de cette source dans cette même direction. L'unité de mesure de la luminance est la candela par mètre carré (cd/m²). Ce paramètre reflète l'intensité lumineuse perçue par un observateur ; laquelle peut être directe ou réfléchie par une surface éclairée (voirie, façade d'un bâtiment...). La luminance dépend de l'éclairement de la voirie ainsi que de ses caractéristiques photométriques, telles que revêtement, mise en oeuvre, constituants, conditions atmosphériques ambiantes, état (usure) et de l'angle d'observation.

Selon la norme EN 13201-3, le champ de calcul de la luminance commence à 60m de l'observateur, cela rendant à se rapprocher d'une situation réelle *in situ.* Par ailleurs, comme le prévoît cette norme EN 13201-3, il est préconisé d'utiliser des moyens de mesure positionnés à une hauteur de 1,5m et présentant un cône de mesure inférieur à 2min d'arc dans le plan vertical et 20min d'arc dans le plan horizontal.

Bien qu'elle l'indique comme possible, la norme mentionne comme étant une solution moins rigoureuse de mettre en oeuvre un luminancemètre ayant un cône de mesure plus large mis en oeuvre à une distance plus petite et à une hauteur moins élevée. La norme expose que les points de calcul de la luminance doivent être espacés régulièrement dans le champ de calcul.

Le document FR-A-2661248 décrit un procédé et un dispositif de mesure en continu et à la lumière ambiante de la rétroflexion d'un marquage routier et du contraste. Il est prévu un véhicule porteur, des moyens d'émission d'un faisceau lumineux incident projeté sur une surface, des moyens de réception d'un faisceau rétro réfléchi et des moyens de contrôle de la lumière ambiante et du flux lumineux incident.

Le document EP-A-1 486 799 décrit une méthode pour mesurer l'état des marqueurs sur route consistant à mesurer l'état des marqueurs sur route en différents points, à l'aide d'un appareil qui comprend un émetteur lumineux, un capteur comprenant plusieurs détecteurs adjacents ainsi que des moyens de contrôle pour contrôler cet émetteur lumineux. La rétrodiffusion des marqueurs sur route est déterminée à partir de mesures effectuées au niveau de plusieurs points de la route tandis que l'état des autres points de la route est déduit de ces mesures.

Dans un autre domaine, le document US-B-4,505,590 décrit quant à lui un appareil mobile pour détecter la réflectivité de marqueurs sur route. L'appareil mobile comprend un véhicule et un bras allongé sur lequel est monté une source lumineuse pour détecter la lumière rétrodiffusée par les marqueurs pendant que l'appareil mobile se déplace sur la route. Selon ce document, le bras allongé présente un carter doté d'une ouverture traversée par la lumière émise par la source lumineuse ainsi que par la lumière rétrodiffusée par les marqueurs de route. Selon une réalisation, le bras allongé est en connexion pivot avec une extrémité du véhicule et présente des moyens de positionnement permettant de maintenir la portion du bras allongé positionné en regard des marqueurs sur route à une hauteur constante et prédéterminée.

Dans un autre domaine, le document JP-A-H8-238979 décrit un dispositif d'ajustage automatique de l'axe optique des feux d'un véhicule automobile. Pour ce faire, ce document propose un dispositif d'ajustage automatique de l'axe optique de feux comportant un capteur capable de détecter l'orientation d'un véhicule à partir de l'évolution du motif lumineux rétrodiffusé par la surface de la route illuminée par les feux du véhicule. Ce capteur transmet ensuite un signal de mesure à un circuit de contrôle qui en déduit une donnée de contrôle appropriée pour modifier l'orientation de l'axe optique des feux du véhicule.

L'état de la technique peut être illustré également par les documents WO 2007/012839, WO 2007/060181, EP-A-0520973, FR-A-2840990, US 7411681, WO 2004/095007 et WO 2007/003036.

L'invention a pour but un procédé et un dispositif de mesure de la luminance d'une surface de voirie qui soit conforme à la norme EN 13201 et qui combine une mesure à une distance plus courte que celle prévue par la norme (60m) et une mesure dynamique, tout en assurant une pertinence de la mesure, malgré les irrégularités de la voirie.

A cet effet, et selon un premier aspect, l'invention vise un procédé de mesure de la luminance d'une surface de la voirie selon la définition de la revendication 1.

Il convient de noter que l'on entend par valeurs normales, dans le cadre de la présente invention, les valeurs préconisées par la norme EN 13201 pour réaliser la mesure de la luminance des voiries.

Selon une réalisation, l'on sélectionne des moyens de mesure de la luminance ayant un cône de mesure α compris entre 12min d'arc et 120min d'arc, l'on dispose ces moyens de mesure de la luminance par rapport à la voirie C à une hauteur h comprise entre 0,02m et 0,5m et l'on oriente lesdits moyens de mesure de la luminance par rapport à la localisation de l'observateur selon une direction D apte à mesurer la luminance dans une certaine zone Z située, par rapport à la localisation de l'observateur, à une distance d comprise entre 1m et 20m.

Selon les cas, l'on effectue une mesure de la luminance de façon continue ou de façon discontinue, notamment à intervalles réguliers prédéfinis.

Selon les cas, l'on effectue une mesure de la luminance alors que l'on déplace ou alors que l'on maintien à l'arrêt les moyens de mesure de la luminance sur et le long de la voirie. Ainsi, selon une réalisation, l'on effectue une mesure de la luminance alors que l'on déplace les moyens de mesure de la luminance sur et le long de la voirie à une vitesse réduite permettant une prise de mesures à intervalles successifs prédéfinis.

Selon l'invention, pour maintenir substantiellement constant la hauteur et la direction de mesure, on dispose les moyens de mesure de la luminance sur un véhicule apte à se déplacer ou à être déplacé sur et le long de la voirie et on pourvoit ce véhicule de moyens de stabilisation à des valeurs substantiellement constantes et prédéfinies de la hauteur et de la direction de mesure des moyens de mesure de luminance.

Selon une réalisation, l'on adapte la direction de mesure des moyens de mesure de la luminance en fonction des virages à venir de la voirie.

Selon une réalisation, l'on positionne les moyens de mesure par rapport à la voirie par géo localisation satellitaire.

Selon une réalisation, l'on effectue une mesure de la luminance en trois zones transversales de la voirie, de façon simultanée.

Selon une réalisation, lorsque l'on effectue une mesure de la luminance de la certaine zone de la voirie, on effectue également, depuis une mesure de l'éclairement horizontal de la voirie dans une seconde zone proche de la certaine zone de mesure de la luminance et, en particulier en trois zones transversales de la voirie, de façon simultanée.

Selon une réalisation, l'on visualise et/ou imprime et/ou enregistre les mesures de luminance et les données relatives à la voirie, et, le cas échéant, les mesures d'éclairement. Selon une réalisation, en outre, l'on visualise et/ou imprime et/ou enregistre les données relatives au cône de mesure choisi, à la hauteur choisie et à la direction de mesure choisie.

Selon une réalisation, l'on effectue un traitement relatif aux mesures de luminance et les données relatives à la voirie et, le cas échéant, aux mesures d'éclairement, et aux données relatives au cône de mesure choisi, à la hauteur choisie et à la direction de mesure choisie. Selon une réalisation, le traitement est choisi dans les traitements suivants : critères d'exigences de performance de la voirie considérée ; restitution numérique et/ou graphique des mesures et données ; simulation d'aménagement de la voirie considérée.

Selon une réalisation, l'on sélectionne un cône de mesure d'angle α de 30 à 60 min d'arc, une hauteur h sensiblement égale à 0,09m, une direction D d'angle β de 89^{±0.5}° par rapport à la normale à la voirie. Dans ce cas, l'on mesure la luminance dans une zone située par rapport à la localisation de l'observateur à une distance moyenne d de 3,3m.

Selon un second aspect, l'invention vise un véhicule de mesure de la luminance d'une surface de voirie.

Selon une réalisation, les moyens de mesure de la luminance présente un cône de mesure α compris entre 12min d'arc et 120min d'arc, que ces moyens de mesure de la luminance sont disposés par rapport à la voirie C à une hauteur h comprise entre 0,02m et 0,5m et que lesdits moyens de mesure de la luminance sont orientés, par rapport à la localisation de l'observateur, selon une direction D apte à mesurer la luminance dans une certaine zone Z située, par rapport à la localisation de l'observateur, à une distance d comprise entre 1m et 20m.

Selon l'invention, les moyens de stabilisation se présentent sous la forme d'un chariot porteur reposant sur la voirie par des roues ou analogue, comportant des moyens de stabilisation d'assiette.

Selon une réalisation, ces moyens de stabilisation d'assiette sont à fonctionnement mécanique et/ou électronique.

Selon les réalisations, les moyens de mesure de la luminance sont aptes soit à fonctionner de façon continue soit à fonctionner de façon discontinue.

Selon les réalisations, les moyens de mesure de la luminance sont aptes soit à être mis en oeuvre alors que le véhicule est en déplacement sur et le long de la voirie soit à être mis en oeuvre alors que le véhicule est à l'arrêt sur la voirie.

Selon une réalisation, le véhicule comporte en outre des moyens d'adaptation de la direction de mesure des moyens de mesure de la luminance responsifs aux virages à venir de la voirie.

Selon une réalisation, le véhicule comporte également des moyens de géo localisation satellitaire aptes à positionner les moyens de mesure par rapport à la voirie.

Selon une réalisation, le véhicule est tel que les moyens de mesure de la luminance sont aptes à mesurer la luminance en trois zones transversales de la voirie C, de façon simultanée.

Selon une réalisation, le véhicule supporte également des moyens de mesure de l'éclairement horizontal de la voirie, et, en particulier, ces moyens de mesure de l'éclairement horizontal sont aptes à mesurer l'éclairement horizontal en trois zones transversales de la voirie, de façon simultanée.

Selon une réalisation, le véhicule supporte également des moyens de visualisation et/ou d'impression et/ou d'enregistrement des mesures de luminance et des données relatives à la voirie, et, le cas échéant, des mesures d'éclairement effectuées, et, le cas échéant, des données relatives au cône de mesure choisi, à la hauteur choisie et à la direction de mesure choisie.

L'invention est maintenant décrite en référence aux dessins annexés dans lesquels :
- La figure 1 représente de façon schématique et en élévation le cône de mesure des moyens de mesure de la luminance d'une part en traits pleins selon l'invention, le cône de mesure étant choisi plus large que normalement et la zone de mesure située par rapport à la localisation de l'observateur à plus courte distance que normalement, et d'autre part en tiretés conformément à l'usage préconisé selon la norme EN 13201.
- La figure 2 représente de façon schématique et de dessus le cône de mesure des moyens de mesure de la luminance, la surface de la zone de mesure et sa distance moyenne par rapport à la localisation de l'observateur d'une part en traits pleins selon l'invention et d'autre part en tiretés conformément à l'usage préconisé selon la norme EN 13201.
- La figure 3 représente de façon schématique et de dessus une voirie, les trois zones transversales de mesure simultanée de la luminance et la disposition des trois points de mesure d'éclairement.
- La figure 4 représente en situation et en élévation, un véhicule de mesure de la luminance et de l'éclairement horizontal.

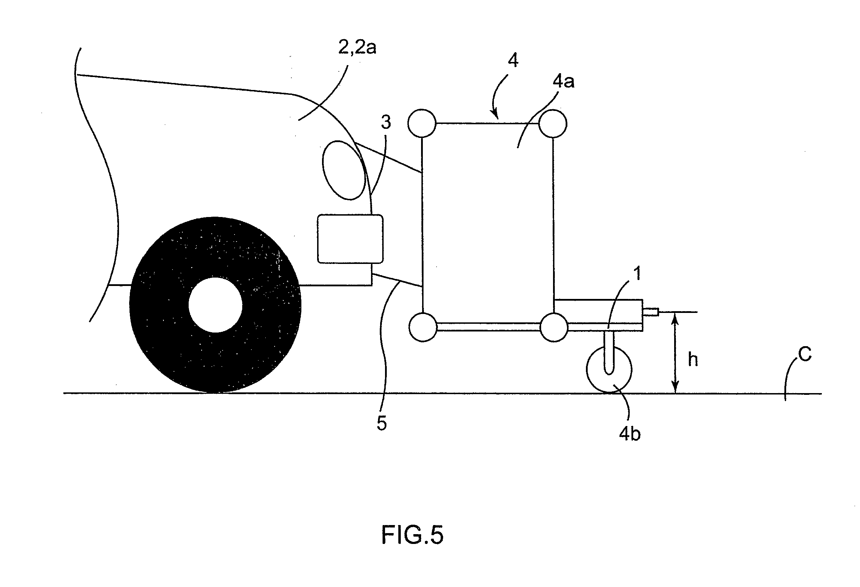

- La figure 5 est une vue partielle à plus grande échelle d'un premier exemple de chariot porteur faisant partie du véhicule. Ce chariot porte les moyens de mesure de la luminance.
- La figure 6 est une vue partielle à plus grande échelle d'un deuxième exemple de chariot porteur faisant partie du véhicule et portant les moyens de mesure de la luminance.

L'invention s'inscrit dans le cadre de la norme européenne EN 13201 sur l'éclairage public et s'intéresse tout spécialement à la luminance.

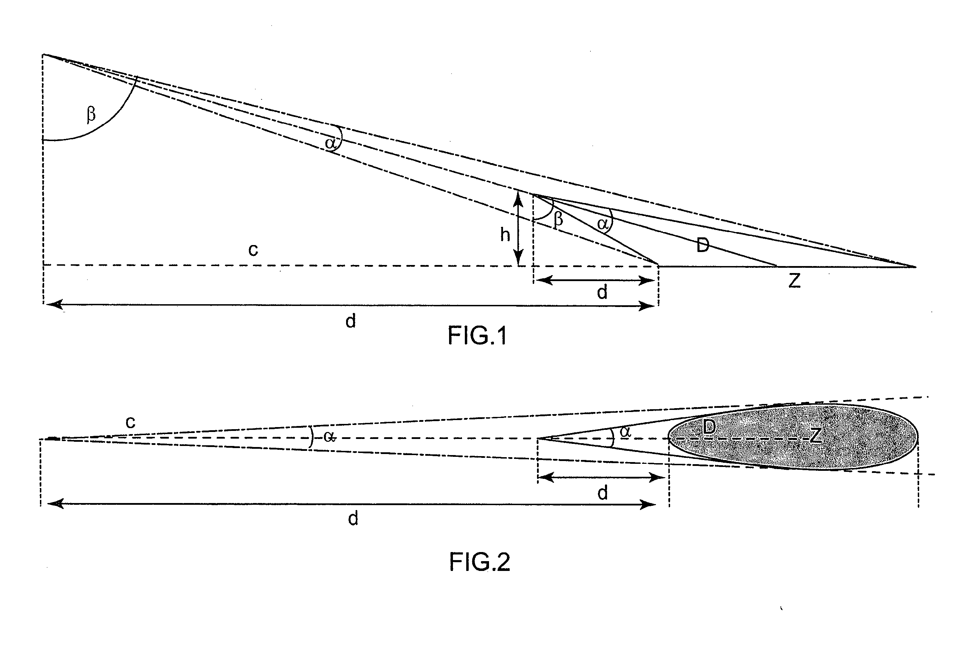

Alors que, selon l'enseignement de la norme EN 13201-3, le champ de calcul de la luminance commence à 60m de l'observateur et doit englober deux luminaires de la même rangée (comme représenté en tiretés sur les figures 1 et 2), l'invention vise une solution que la norme qualifie de « moins rigoureuse » et qui consiste à mettre en oeuvre des moyens 1 de mesure de la luminance ayant un cône de mesure d'angle α (en direction horizontale) plus large, à une distance d (en direction horizontale) plus petite et à une hauteur h (en direction verticale) moins élevée que ce que prévoit la norme telle qu'elle existe à la date de dépôt de la présente demande de brevet (comme représenté en traits pleins sur les figures 1 et 2).

En effet, lorsque le luminancemètre est positionné à 60 mètres de la cible comme le prévoît la norme EN 13201-3, il est délicat d'assurer que le cône de mesure soit projeté au milieu de la voirie, notamment à l'approche d'un virage. Il est alors nécessaire de disposer de moyens mécaniques permettant de modifier l'orientation du cône de mesure afin de suivre les courbes de la chaussée. Mais l'utilisation de tels moyens mécaniques d'orientation est problématique pour des raisons de coûts et, en outre, ne permet pas d'obtenir une précision satisfaisante.

Au contraire, l'utilisation de moyens de mesure selon l'invention permet de mesurer la luminance de la chaussée à une distance plus proche du véhicule. Le suivi du tracé de la chaussée est alors facilité lors des mesures dynamiques et, notamment, à l'approche d'un virage sans qu'il soit nécessaire d'employer de moyens d'orientation tels qu'auparavant.

Selon l'invention, on sélectionne des moyens 1 de mesure de la luminance ayant un cône de mesure d'angle α choisi.

On place ces moyens 1 de mesure de la luminance par rapport à la voirie C (supposée horizontale pour les besoins de la description) à une hauteur h choisie.

On oriente ces moyens 1 de mesure de la luminance par rapport à la localisation d'un observateur où se trouvent les moyens 1 de mesure de la luminance selon une direction D choisie faisant un angle β égal ou voisin de 89^{±0}_{.}⁵° par rapport à la normale à la voirie C.

Dans une réalisation, on prévoit des moyens 1 de mesure de la luminance ayant un cône de mesure d'angle α choisi de 30 à 60 min d'arc à une hauteur h choisie sensiblement égale à 0.09m, orientés par rapport à la localisation de l'observateur selon une direction D choisie d'angle β de 89^{±0.5}° par rapport à la normale à la voirie C, de manière que la luminance soit mesurée dans une certaine zone Z choisie située par rapport à la localisation de l'observateur à une distance moyenne d choisie de 3,3m.

De façon plus générale, il serait également possible de sélectionner des moyens (1) de mesure de la luminance ayant un cône de mesure α compris entre 12min d'arc et 120min d'arc, de disposer ces moyens (1) de mesure de la luminance par rapport à la voirie C à une hauteur h comprise entre 0,02m et 0,5m et d'orienter lesdits moyens (1) de mesure de la luminance par rapport à la localisation de l'observateur selon une direction D apte à mesurer la luminance dans une certaine zone Z située, par rapport à la localisation de l'observateur, à une distance d comprise entre 1m et 20m.

Ainsi, la luminance est mesurée dans une certaine zone Z choisie située par rapport à la localisation de l'observateur - où se trouvent les moyens 1 de mesure de la luminance - à une distance moyenne d choisie.

En combinaison, on déplace les moyens 1 de mesure de la luminance sur et le long de la voirie C au moyen d'un véhicule 2 de mesure supportant ces moyens 1.

Lors du déplacement des moyens 1 de mesure de la luminance, on met en oeuvre ceux-ci pour effectuer une mesure de la luminance de la certaine zone Z de la voirie C en correspondance avec le cône de mesure α choisi, la hauteur h choisie et la direction D de mesure choisie.

Le véhicule 2 supporte par conséquent des moyens 1 de mesure de la luminance qui sont disposés par rapport à la voirie à une hauteur h, et sont orientés par rapport à la localisation de l'observateur selon une direction D d'angle β par rapport à la normale à la voirie C égal ou voisin de 89^{±0.5}°.

Selon les réalisations envisagées, l'on effectue une mesure de la luminance de façon continue ou l'on effectue une mesure de la luminance de façon discontinue, par exemple à intervalles de distance successifs réguliers ou non, mais prédéfinis.

Dans une réalisation, le véhicule 2 avance à la vitesse de 10 km/h environ, ce qui correspond à un intervalle de 3m, la vitesse pouvant être comprise entre 3,6 km/h et 18 km/h, ce qui correspond à des intervalles respectifs de 1m et 5 m.

Bien entendu, les moyens 1 de mesure de la luminance sont choisis en conséquence, à savoir, selon les réalisations pour être aptes à fonctionner de façon continue ou aptes à fonctionner de façon discontinue.

Selon les réalisations envisagées, l'on effectue une mesure de la luminance alors que l'on déplace les moyens 1 de mesure de la luminance sur et le long de la voirie C de la voirie, au moyen du véhicule 2, par exemple à une vitesse réduite permettant une prise de mesures à intervalles successifs, ou l'on effectue une mesure de la luminance alors que l'on maintien à l'arrêt les moyens 1 de mesure de la luminance sur la voirie C de la voirie.

Bien entendu, les moyens 1 de mesure de la luminance sont choisis en conséquence, à savoir, selon les réalisations pour être aptes à être mis en oeuvre alors que le véhicule 2 est en déplacement sur et le long de la voirie ou aptes à être mis en oeuvre alors que le véhicule 2 est à l'arrêt sur la voirie.

Ces variantes peuvent être combinées, dans une certaine mesure : la mesure de la luminance étant continue alors que le véhicule 2 est en mouvement, ou la mesure de la luminance étant discontinue alors que le véhicule 2 est à l'arrêt, étant en mouvement entre deux mesures successives, ou la mesure de la luminance étant discontinue alors que le véhicule 2 est mouvement, ou la mesure de la luminance étant continue alors que le véhicule 2 est soit en mouvement soit à l'arrêt. Cette dernière solution peut trouver un intérêt pour procéder à certaines opérations autres que la mesure de la luminance alors que le véhicule 2 est - et doit être - à l'arrêt.

Egalement en combinaison, au moins lors des mesures de luminance, on maintient substantiellement constant la hauteur h et la direction de mesure D.

Dans une réalisation, le véhicule 2 de mesure, spécialement destiné à la mise en oeuvre du procédé, est agencé pour être apte à se déplacer ou être déplacé sur et le long de la voirie. Par exemple, le véhicule 2 est un véhicule automobile 2a. En variante, il s'agit d'un véhicule tracté ou propulsé. Le véhicule 2 comporte un avant 3 définissant une direction et un sens normal de déplacement.

Le véhicule 2 est agencé pour supporter les moyens 1 de mesure de la luminance choisis comme il a été indiqué, ceux-ci étant aptes, lors du déplacement du véhicule 2, à être mis en oeuvre pour effectuer une mesure de la luminance de la certaine zone Z de la voirie C. L'expression « lors du déplacement du véhicule 2 » doit être comprise selon les différentes variantes exposées ci-dessus.

Afin de maintenir substantiellement constant la hauteur h et la direction de mesure D, le véhicule 2 comporte des moyens 4 de stabilisation agissant sur les moyens 1 de mesure de la luminance qu'il supporte, aptes à stabiliser à des valeurs substantiellement constantes et prédéfinies la hauteur h et la direction de mesure D, nonobstant l'état de la voirie C.

Ces moyens 4 de stabilisation se présentent, dans la réalisation représentée sur les figures, sous la forme d'un chariot porteur 4a reposant sur la voirie par des roues avant 4b - ou analogue -, comportant des moyens de stabilisation d'assiette, à fonctionnement mécanique et/ou électronique.

Le chariot 4a est placé devant l'avant 3 du véhicule automobile 2a et relié à lui par un système à tringles 5.

Une telle disposition a pour effet d'atténuer les irrégularités de la voirie C.

Le cas échéant, au chariot 4a peuvent être associés des moyens gyroscopiques ou de télémétrie couplés avec des moyens de réglage de hauteur et/ou d'angle.

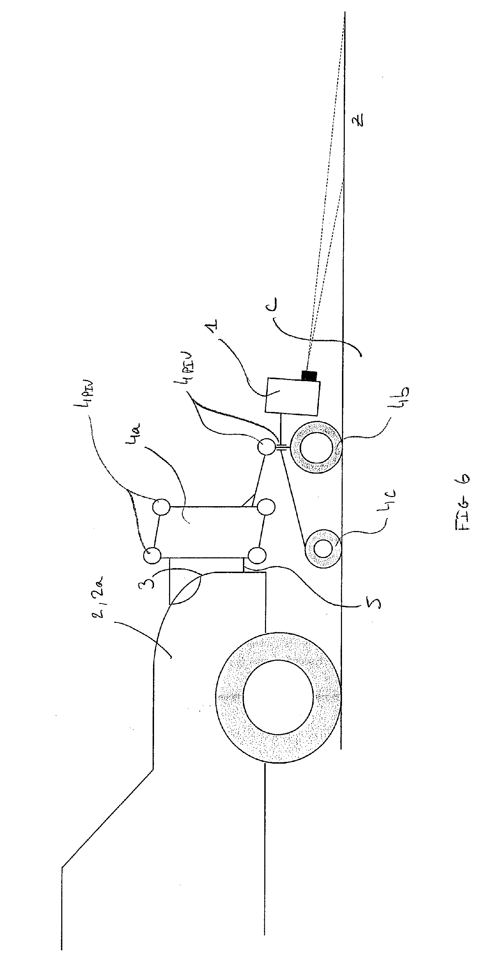

Selon une réalisation alternative représentée sur la figure 6, les moyens 4 de stabilisation se présentent sous la forme d'un chariot porteur 4a reposant sur la chaussée C par l'intermédiaire de roues avant 4b - ou analogues. Le chariot porteur 4a comporte quatre liaisons pivots 4_{PIV} et est relié à l'axe de maintien de la roue avant 4b par le biais d'une autre liaison pivot 4_{PIV}.

Un tel agencement des moyens 4 de stabilisation permet de maintenir substantiellement constante la direction D de la mesure. Notamment, en cas de freinage du véhicule, les amortisseurs avant se compriment tandis que les amortisseurs arrières s'allongent, ce qui génère un changement d'inclinaison du véhicule. Toutefois, grâce à l'utilisation du système mécanique formé par les liaisons pivots 4_{PIV} précitées, cette modification d'inclinaison n'a pas d'influence sur la direction D de la mesure.

En outre, cet agencement des moyens 4 de stabilisation permet également de suivre la topographie de la chaussée et donc de maintenir sensiblement constante la hauteur définie entre les moyens 1 de mesure et la chaussée C.

Les moyens 4 de stabilisation formés notamment par le chariot porteur 4a et les cinq liaisons pivots 4_{PIV} précitées assurent donc une stabilisation d'assiette aptes à stabiliser à des valeurs substantiellement constantes et prédéfinies la hauteur h et la direction de mesure D des moyens 1 de mesure de luminance nonobstant l'état de la voirie C ou le comportement du véhicule 2.

Selon cette réalisation, les moyens 1 de mesure sont par ailleurs soutenus par une roue complémentaire 4c formant un ensemble structurel relié à l'axe de la roue avant 4b par le biais d'une autre liaison pivot 4_{PIV} en rotation autour de l'axe de maintien de la roue avant 4b. Ainsi, l'ensemble formé par les moyens de mesure 1 et la roue complémentaire 4c peut, mécaniquement, suivre la trajectoire de la chaussée C.

De ce fait, la direction D desdits moyens 1 de mesure, et plus particulièrement la direction de l'axe optique de la caméra, s'adapte pour suivre la direction de la chaussé C même en cas de virage.

Les moyens 1 de mesure de la luminance sont portés à l'avant et en position inférieure du chariot 4a. Ils sont dirigés vers l'avant et la zone Z se trouve vers l'avant du véhicule automobile 2a, ce qui permet une manipulation intuitive.

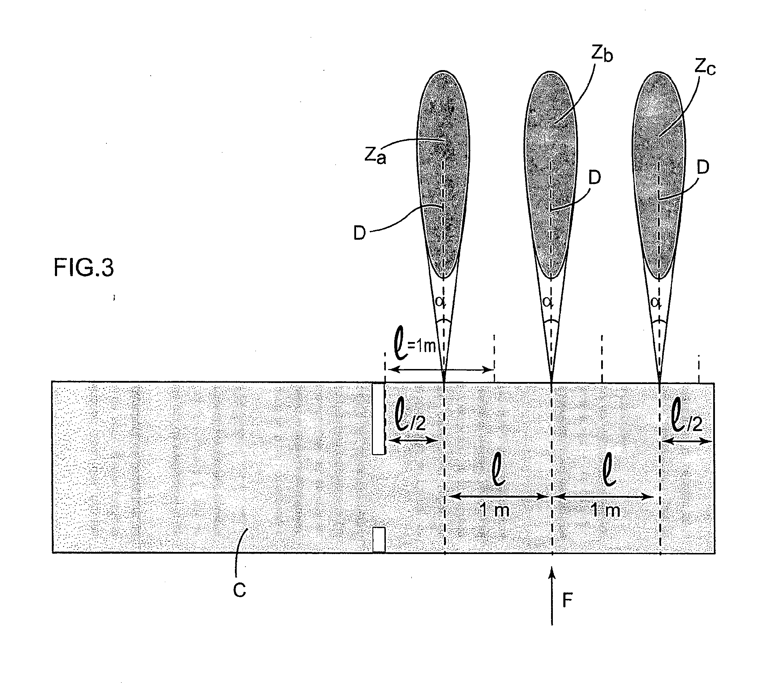

Selon une possibilité et en vue de satisfaire la norme, l'on effectue une mesure de la luminance en trois zones transversales de la voirie, de façon simultanée, comme illustré par la figure 3.

Bien entendu, les moyens 1 de mesure de la luminance sont alors choisis pour être aptes à mesurer la luminance en trois zones transversales de la voirie, de façon simultanée.

Selon une possibilité, on adapte la direction de mesure des moyens de mesure de la luminance en fonction des virages à venir de la voirie. Par exemple si l'observateur - tel que le conducteur du véhicule 2a - constate que la voirie forme un virage ou un tournant à droite, il commandera en conséquence la direction D des moyens 1 de mesure de luminance afin de toujours effectuer la mesure sur la voirie et non à côté d'elle par exemple sur un bas côté ou sur une barrière de séparation avec la voirie de sens inverse ou sur la voirie de sens inverse.

Dans un tel cas, le véhicule 2 comporte des moyens d'adaptation de la direction de mesure D des moyens 1 de mesure de la luminance responsifs aux virages à venir de la voirie. Ces moyens sont, selon les cas, à commande manuelle ou à fonctionnement automatique en fonction de la cartographie de la voirie, de mesures réalisées par un système de géo localisation satellitaire 6 ou de toute autre mesure ou repérage permettant d'anticiper un virage ou un tournant.

Un tel système de géo localisation satellitaire 6, dont est pourvu le véhicule 2, peut également être mis en oeuvre en vue de positionner les moyens 1 de mesure par rapport à la voirie.

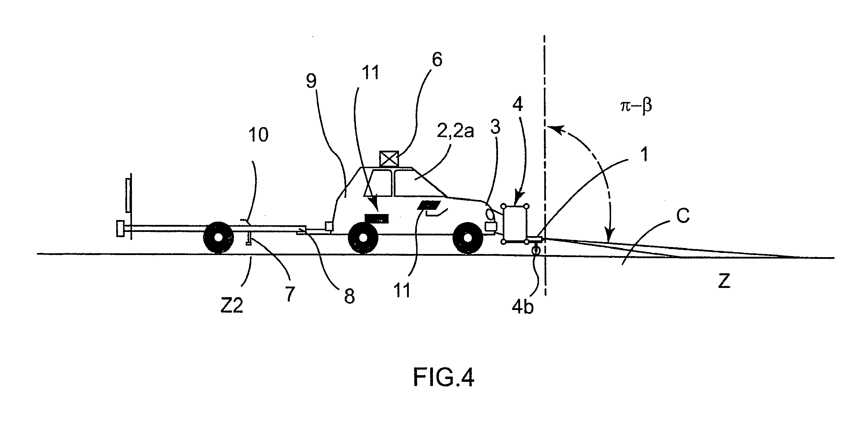

Selon une réalisation représentée sur la figure 4, le véhicule 2 supporte également des moyens 7 de mesure de l'éclairement horizontal de la voirie C de la voirie. De tels moyens 7 peuvent être portés par une remorque 8 tractée et située derrière l'arrière 9 du véhicule automobile 2a.

Avec une telle réalisation, il est possible, lorsque l'on effectue une mesure de la luminance de la certaine zone Z de la voirie, d'effectuer également, une mesure de l'éclairement horizontal de la voirie C dans une seconde zone Z2 proche mais écartée - en l'espèce vers l'arrière - de la certaine zone Z de mesure de la luminance.

La figure 3 correspond précisément à la mesure d'éclairement. On y voit une chaussée à deux voies, la mesure d'éclairement étant effectuée, en l'occurrence, sur la voie de droite, le véhicule 2 s'y déplaçant dans le sens de la flèche F,. La cote I correspond à l'interdistance entre les capteurs des moyens 7, conformément à la norme européenne EN 13201-3. Les capteurs doivent être distants d'une distance I/2 du bord de la chaussée et de la ligne médiane.

La figure 3 montre également les trois zones transversales Zₐ, Z_{b} et Z_{c} de la voirie C où, grâce aux moyens 1 de mesure de la luminance, est mesurée la luminance de façon simultanée. A cet effet, le véhicule 2 est tel que les moyens 1 de mesure de la luminance sont aptes à mesurer la luminance en trois zones transversales Zₐ, Z_{b} et Z_{c} de la voirie C, et ce de façon simultanée.

Le cas échéant, aux moyens 7 de mesure de l'éclairement horizontal de la voirie C est associé un autre système de géo localisation satellitaire 10.

Le véhicule 2 supporte également des moyens 11 de visualisation et/ou d'impression et/ou d'enregistrement et/ou de calcul dont les paramètres d'entrée sont les mesures de luminance, les données relatives à la voirie, les mesures d'éclairement lorsque celles-ci sont prévues, et, le cas échéant, les données relatives au cône de mesure choisi, à la hauteur choisie et à la direction de mesure choisie.

Grâce à ces moyens 11, on peut visualiser et/ou imprimer et/ou enregistrer les mesures et données en question et les traiter en mettant en oeuvre des logiciels appropriés.

Par exemple, de tels traitements peuvent être la restitution numérique et/ou graphique des mesures et données et la simulation des aménagements qu'il serait souhaitable d'envisager sur la voirie considérée pour que les performances d'éclairage de celle-ci soient conformes aux normes. Il est également possible d'anticiper les faiblesses ou l'usure ou la perte de performance de l'éclairage, de manière à pouvoir envisager sa gestion prévisionnelle.

## Revendications

1. Procédé de mesure de la luminance d'une surface de voirie, dans lequel :
- on dispose de moyens (1) de mesure de la luminance ayant un certain cône de mesure α,
- on place les moyens (1) de mesure de la luminance par rapport à la voirie C à une certaine hauteur h et on les oriente par rapport à la localisation de l'observateur selon une certaine direction D de mesure,
- on met en oeuvre les moyens (1) de mesure de la luminance pour mesurer la luminance d'une certaine zone Z de la voirie C déterminée par le certain cône de mesure α, la certaine hauteur h et la certaine direction D de mesure, à une certaine distance d de la localisation de l'observateur, où, en combinaison :
- on sélectionne des moyens (1) de mesure de la luminance ayant un cône de mesure α choisi plus large que normalement, c'est-à-dire supérieur à 2min d'arc dans le plan vertical et à 20min d'arc dans le plan horizontal, on dispose ces moyens (1) de mesure de la luminance par rapport à la voirie C à une hauteur h choisie moins élevée que normalement, c'est-à-dire inférieur à 1,5m, et on les oriente par rapport à la localisation de l'observateur selon une direction D apte à mesurer la luminance dans une certaine zone Z située par rapport à la localisation de l'observateur à plus courte distance que normalement, c'est-à-dire inférieure à 60m ;
- on déplace les moyens (1) de mesure de la luminance sur et le long de la voirie C au moyen d'un véhicule (2) de mesure supportant ces moyens (1) et, lors de leur déplacement, on les met en oeuvre pour effectuer une mesure de la luminance de la certaine zone Z de la voirie C en correspondance avec le cône de mesure α choisi, la hauteur h choisie et la direction D de mesure choisie, et **caractérisé en ce que** :
- au moins lors des mesures on met en oeuvre des moyens (4) de stabilisation se présentant sous la forme d'un chariot porteur (4a) reposant sur la voirie C par des roues ou analogue (4b) et comportant des moyens de stabilisation d'assiette de sorte à maintenir substantiellement constant la hauteur h et la direction D de mesure.

2. Procédé selon la revendication 1, **caractérisé par le fait que** l'on sélectionne des moyens (1) de mesure de la luminance ayant un cône de mesure α compris entre 12min d'arc et 120min d'arc, que l'on dispose ces moyens (1) de mesure de la luminance par rapport à la voirie C à une hauteur h comprise entre 0,02m et 0,5m et que l'on oriente lesdits moyens (1) de mesure de la luminance par rapport à la localisation de l'observateur selon une direction D apte à mesurer la luminance dans une certaine zone Z située, par rapport à la localisation de l'observateur, à une distance d comprise entre 1m et 20m.

3. Procédé selon la revendication 1 ou 2, **caractérisé par le fait que** l'on effectue une mesure de la luminance de façon continue.

4. Procédé selon la revendication 1 ou 2, **caractérisé par le fait que** l'on effectue une mesure de la luminance de façon discontinue.

5. Procédé selon la revendication 4, **caractérisé par le fait que** l'on effectue une mesure de la luminance de façon discontinue à intervalles successifs prédéfinis.

6. Procédé selon l'une quelconque des revendications 1 à 5, **caractérisé par le fait que** l'on effectue une mesure de la luminance alors que l'on déplace les moyens (1) de mesure de la luminance sur et le long de la voirie C.

7. Procédé selon la revendication 6, **caractérisé par le fait que** l'on effectue une mesure de la luminance alors que l'on déplace les moyens (1) de mesure de la luminance sur et le long de la voirie C à une vitesse réduite permettant une prise de mesures à intervalles successifs.

8. Procédé selon l'une quelconque des revendications 1 à 7, **caractérisé par le fait que** l'on effectue une mesure de la luminance alors que l'on maintien à l'arrêt les moyens (1) de mesure de la luminance sur la voirie C.

9. Procédé selon l'une quelconque des revendications 1 à 8, **caractérisé par le fait que** pour maintenir substantiellement constant la hauteur h et la direction D de mesure, on dispose les moyens (1) de mesure de la luminance sur un véhicule (2) apte à se déplacer ou à être déplacé sur et le long de la voirie C et on pourvoit ce véhicule (2) de moyens (4) de stabilisation à des valeurs substantiellement constantes et prédéfinies de la hauteur h et de la direction D de mesure des moyens (1) de mesure de luminance.

10. Procédé selon l'une quelconque des revendications 1 à 9, **caractérisé par le fait que** l'on adapte la direction D de mesure des moyens (1) de mesure de la luminance en fonction des virages à venir de la voirie C.

11. Procédé selon l'une quelconque des revendications 1 à 10, **caractérisé par le fait que** l'on positionne les moyens (1) de mesure par rapport à la voirie C par géo localisation satellitaire.

12. Procédé selon l'une quelconque des revendications 1 à 11, **caractérisé par le fait que** l'on effectue une mesure de la luminance en trois zones transversales de la voirie, de façon simultanée.

13. Procédé selon l'une quelconque des revendications 1 à 12, **caractérisé par le fait que** lorsque l'on effectue une mesure de la luminance de la certaine zone Z de la voirie, on effectue également, une mesure de l'éclairement horizontal de la voirie dans une seconde zone Z2 proche de la certaine zone Z de mesure de la luminance.

14. Procédé selon la revendication 13, **caractérisé par le fait que** l'on effectue une mesure de l'éclairement en trois zones transversales de la voirie C, de façon simultanée.

15. Procédé selon l'une quelconque des revendications 1 à 14, **caractérisé par le fait que** l'on visualise et/ou imprime et/ou enregistre les mesures de luminance et les données relatives à la voirie C, et, le cas échéant, les mesures d'éclairement.

16. Procédé selon la revendication 15, **caractérisé par le fait que**, en outre, l'on visualise et/ou imprime et/ou enregistre les données relatives au cône de mesure α choisi, à la hauteur h choisie et à la direction D de mesure choisie.

17. Procédé selon l'une quelconque des revendications 1 à 16, **caractérisé par le fait que** l'on effectue un traitement relatif aux mesures de luminance et les données relatives à la voirie C et, le cas échéant, aux mesures d'éclairement, et aux données relatives au cône de mesure α choisi, à la hauteur h choisie et à la direction de mesure D choisie.

18. Procédé selon la revendication 17, **caractérisé par le fait que** le traitement est choisi dans les traitements suivants : critères d'exigences de performance de la voirie considérée ; restitution numérique et/ou graphique des mesures et données ; simulation d'aménagement de la voirie considérée.

19. Procédé selon l'une quelconque des revendications 1 à 18, **caractérisé par le fait que** l'on sélectionne un cône de mesure d'angle α de 30 à 60 min d'arc, une hauteur h sensiblement égale à 0,09m, une direction D d'angle β de 89^{±0.5}° par rapport à la normale à la voirie C.

20. Procédé selon la revendication 19, **caractérisé par le fait que** l'on mesure la luminance dans une zone Z située par rapport à la localisation de l'observateur à une distance moyenne d de 3,3m.

21. Véhicule (2) de mesure de la luminance d'une surface de voirie spécialement destiné à la mise en oeuvre du procédé selon l'une quelconque des revendications 1 à 19, étant :
- agencé pour être apte à se déplacer ou être déplacé sur et le long de la voirie C,
- agencé pour supporter les moyens (1) de mesure de la luminance ayant un cône de mesure α choisi plus large que normalement, c'est-à-dire supérieur à 2min d'arc dans le plan vertical et à 20 min d'arc dans le plan horizontal, disposés par rapport à la voirie C à une hauteur h choisie moins élevée que normalement, c'est-à-dire inférieur à 1,5m, et orientés par rapport à la localisation de l'observateur selon une direction D apte à mesurer la luminance dans une certaine zone Z située par rapport à la localisation de l'observateur à plus courte distance que normalement, c'est-à-dire inférieure à 60m ;
- les moyens (1) de mesure de la luminance étant agencés pour être aptes, lors du déplacement du véhicule (2), à être mis en oeuvre pour effectuer une mesure de la luminance de la certaine zone Z de la voirie C en correspondance avec le cône de mesure α choisi, la hauteur h choisie et la direction de mesure D choisie, et **caractérisé en ce que**
- il comporte des moyens (4) de stabilisation se présentant sous la forme d'un chariot porteur (4a) reposant sur la voirie C par des roues ou analogue (4b), comportant des moyens de stabilisation d'assiette aptes à agir sur les moyens (1) de mesure de la luminance, aptes à stabiliser à des valeurs substantiellement constantes et prédéfinies la hauteur h et la direction de mesure D des moyens (1) de mesure de luminance nonobstant l'état de la voirie C.

22. Véhicule (2) selon la revendication 21, **caractérisé par le fait que** les moyens (1) de mesure de la luminance présente un cône de mesure α compris entre 12min d'arc et 120min d'arc, que ces moyens (1) de mesure de la luminance sont disposés par rapport à la voirie C à une hauteur h comprise entre 0,02m et 0,5m et que lesdits moyens (1) de mesure de la luminance sont orientés, par rapport à la localisation de l'observateur, selon une direction D apte à mesurer la luminance dans une certaine zone Z située, par rapport à la localisation de l'observateur, à une distance d comprise entre 1m et 20m.

23. Véhicule (2) selon l'une quelconque des revendications 21 et 22, **caractérisé par le fait que** les moyens de stabilisation d'assiette sont à fonctionnement mécanique et/ou électronique.

24. Véhicule (2) selon l'une quelconque des revendications 21 à 23, **caractérisé par le fait que** les moyens (1) de mesure de la luminance sont aptes à fonctionner de façon continue.

25. Véhicule (2) selon l'une quelconque des revendications 21 à 23, **caractérisé par le fait que** les moyens (1) de mesure de la luminance sont aptes à fonctionner de façon discontinue.

26. Véhicule (2) selon l'une quelconque des revendications 21 à 25, **caractérisé par le fait que** les moyens (1) de mesure de la luminance sont aptes à être mis en oeuvre alors que le véhicule (2) est en déplacement sur et le long de la voirie.

27. Véhicule (2) selon l'une quelconque des revendications 21 à 26, **caractérisé par le fait que** les moyens (1) de mesure de la luminance sont aptes à être mis en oeuvre alors que le véhicule (2) est à l'arrêt sur la voirie C.

28. Véhicule (2) selon l'une quelconque des revendications 21 à 27, **caractérisé par le fait qu'**il comporte en outre des moyens d'adaptation de la direction de mesure D des moyens (1) de mesure de la luminance responsifs aux virages à venir de la voirie.

29. Véhicule (2) selon l'une quelconque des revendications 21 à 28, **caractérisé par le fait qu'**il comporte également des moyens de géo localisation satellitaire aptes à positionner les moyens (1) de mesure par rapport à la voirie C.

30. Véhicule (2) selon l'une quelconque des revendications 21 à 29, **caractérisé par le fait que** les moyens (1) de mesure de la luminance sont aptes à mesurer la luminance en trois zones transversales de la voirie C, de façon simultanée.

31. Véhicule (2) selon l'une quelconque des revendications 21 à 30, **caractérisé par le fait qu'**il supporte également des moyens (7) de mesure de l'éclairement horizontal de la voirie C.

32. Véhicule (2) selon la revendication 31, **caractérisé par le fait que** les moyens (7) de mesure de l'éclairement sont aptes à mesurer l'éclairement en trois zones transversales de la voirie C, de façon simultanée.

33. Véhicule (2) selon l'une quelconque des revendications 21 à 32, **caractérisé par le fait qu'**il supporte également des moyens de visualisation et/ou d'impression et/ou d'enregistrement des mesures de luminance et des données relatives à la voirie, et, le cas échéant, des mesures d'éclairement effectuées, et, le cas échéant, des données relatives au cône de mesure α choisi, à la hauteur h choisie et à la direction de mesure D choisie.

## Patentansprüche

1. Verfahren zum Messen der Luminanz einer Fahrbahnoberfläche, bei dem:
- Mittel (1) zum Messen der Luminanz mit einem gewissen Messkegel α angeordnet werden,
- die Mittel (1) zum Messen der Luminanz in Bezug zur Fahrbahn C in einer gewissen Höhe h angeordnet und in Bezug zur Lokalisierung des Beobachters in eine gewisse Messrichtung D ausgerichtet werden,
- die Mittel (1) zum Messen der Luminanz eingesetzt werden, um die Luminanz einer gewissen Zone Z der Fahrbahn C, die durch den gewissen Messkegel α, die gewisse Höhe h und die gewisse Messrichtung D bestimmt ist, in einem gewissen Abstand d der Lokalisierung des Beobachters zu messen,
wobei in Kombination:
- Mittel (1) zum Messen der Luminanz ausgewählt werden, die einen breiter als normal gewählten Messkegel α haben, d.h. größer als 2 Bogenminuten in der Vertikalebene und als 20 Bogenminuten in der Horizontalebene, diese Mittel (1) zum Messen der Luminanz in Bezug zu der Fahrbahn C in einer weniger hoch als normal gewählten Höhe h angeordnet werden, d.h. unter 1,5 m, und in Bezug zur Lokalisierung des Beobachters in eine Richtung D ausgerichtet werden, die es ermöglichen, die Luminanz in einer gewissen Zone Z zu messen, die sich in Bezug zur Lokalisierung des Beobachters in einem kürzeren Abstand als normalerweise, d.h. unter 60 m, befindet;
- die Mittel (1) zum Messen der Luminanz auf und entlang der Fahrbahn C mit Hilfe eines Messfahrzeugs (2), das diese Mittel (1) trägt, verschoben werden und bei ihrer Verschiebung eingesetzt werden, um eine Messung der Luminanz in der gewissen Zone Z der Fahrbahn C in Übereinstimmung mit dem gewählten Messkegel α, der gewählten Höhe h und der gewählten Messrichtung D durchzuführen,
**dadurch gekennzeichnet, dass**:
- zumindest bei den Messungen Stabilisierungsmittel (4) eingesetzt werden, die in Form eines Tragschlittens (4a) vorhanden sind, der auf der Fahrbahn C mit Rädern oder dergleichen (4b) aufliegt und Mittel zur Stabilisierung der Basis umfasst, um die Höhe h und die Messrichtung D im Wesentlichen konstant zu halten.

2. Verfahren nach Anspruch 1, **dadurch gekennzeichnet, dass** Mittel (1) zum Messen der Luminanz gewählt werden, die einen Messkegel α zwischen 12 Bogenminuten und 120 Bogenminuten haben, dass diese Mittel (1) zum Messen der Luminanz in Bezug zur Fahrbahn C auf einer Höhe h zwischen 0,02 m und 0,5 m angeordnet werden, und dass die Mittel (1) zum Messen der Luminanz in Bezug zur Lokalisierung des Beobachters in eine Richtung D ausgerichtet werden, die es ermöglicht, die Luminanz in einer gewissen Zone Z zu messen, die sich in Bezug zur Lokalisierung des Beobachters in einem Abstand d zwischen 1 m und 20 m befindet.

3. Verfahren nach Anspruch 1 oder 2, **dadurch gekennzeichnet, dass** eine Messung der Luminanz auf kontinuierliche Weise durchgeführt wird.

4. Verfahren nach Anspruch 1 oder 2, **dadurch gekennzeichnet, dass** eine Messung der Luminanz auf diskontinuierliche Weise durchgeführt wird.

5. Verfahren nach Anspruch 4, **dadurch gekennzeichnet, dass** eine Messung der Luminanz auf diskontinuierliche Weise in vordefinierten aufeinanderfolgenden Intervallen durchgeführt wird.

6. Verfahren nach einem der Ansprüche 1 bis 5, **dadurch gekennzeichnet, dass** eine Messung der Luminanz durchgeführt wird, während die Mittel (1) zum Messen der Luminanz auf und entlang der Fahrbahn C verschoben werden.

7. Verfahren nach Anspruch 6, **dadurch gekennzeichnet, dass** eine Messung der Luminanz durchgeführt wird, während die Mittel (1) zum Messen der Luminanz auf und entlang der Fahrbahn C mit einer verringerten Geschwindigkeit verschoben werden, die eine Vornahme von Messungen in aufeinanderfolgenden Intervallen ermöglicht.

8. Verfahren nach einem der Ansprüche 1 bis 7, **dadurch gekennzeichnet dass** eine Messung der Luminanz durchgeführt wird, während die Mittel (1) zum Messen der Luminanz auf der Fahrbahn C angehalten werden.

9. Verfahren nach einem der Ansprüche 1 bis 8, **dadurch gekennzeichnet, dass**, um die Höhe h und die Messrichtung D im Wesentlichen konstant zu halten, die Mittel (1) zum Messen der Luminanz auf einem Fahrzeug (2) angeordnet werden, das geeignet ist, sich auf und entlang der Fahrbahn C zu bewegen oder bewegt zu werden, und dass dieses Fahrzeug (2) mit Stabilisierungsmitteln (4) mit im Wesentlichen konstanten und vordefinierten Werten der Höhe h und der Messrichtung D der Mittel (1) zum Messen der Luminanz versehen ist.

10. Verfahren nach einem der Ansprüche 1 bis 9, **dadurch gekennzeichnet, dass** die Messrichtung D der Mittel (1) zum Messen der Luminanz in Abhängigkeit von den kommenden Kurven der Fahrbahn C angepasst wird.

11. Verfahren nach einem der Ansprüche 1 bis 10, **dadurch gekennzeichnet, dass** die Messhilfsmittel (1) in Bezug zur Fahrbahn C durch Satellitengeolokalisierung positioniert werden.

12. Verfahren nach einem der Ansprüche 1 bis 11, **dadurch gekennzeichnet, dass** eine Messung der Luminanz in drei Querzonen der Fahrbahn gleichzeitig durchgeführt wird.

13. Verfahren nach einem der Ansprüche 1 bis 12, **dadurch gekennzeichnet, dass**, wenn eine Messung der Luminanz der gewissen Zone Z der Fahrbahn durchgeführt wird, auch eine Messung der horizontalen Beleuchtung der Fahrbahn in einer zweiten Zone Z2 nahe der gewissen Zone Z zum Messen der Luminanz durchgeführt wird.

14. Verfahren nach Anspruch 13, **dadurch gekennzeichnet, dass** eine Messung der Beleuchtung der Fahrbahn C in drei Querzonen gleichzeitig durchgeführt wird.

15. Verfahren nach einem der Ansprüche 1 bis 14, **dadurch gekennzeichnet, dass** die Messungen der Luminanz und die Daten zur Fahrbahn C und gegebenenfalls die Beleuchtungsmessungen angezeigt und/oder gedruckt und/oder aufgezeichnet werden.

16. Verfahren nach Anspruch 15, **dadurch gekennzeichnet, dass** ferner die Daten zu dem gewählten Messkegel α, zur gewählten Höhe h und zu der gewählten Messrichtung D angezeigt und/oder gedruckt und/oder aufgezeichnet werden.

17. Verfahren nach einem der Ansprüche 1 bis 16, **dadurch gekennzeichnet, dass** eine Bearbeitung in Zusammenhang mit den Luminanzmessungen und den Daten zur Fahrbahn C und gegebenenfalls mit den Beleuchtungsmessungen und den Daten zu dem gewählten Messkegel α, zur gewählten Höhe h und zur gewählten Messrichtung durchgeführt wird.

18. Verfahren nach Anspruch 17, **dadurch gekennzeichnet**, das die Bearbeitung unter folgenden Bearbeitungen ausgewählt wird: Leistungsanforderungskriterien der betreffenden Fahrbahn; digitale und/oder grafische Bekanntgabe der Messungen und Daten; Einrichtungssimulation der betreffenden Fahrbahn.

19. Verfahren nach einem der Ansprüche 1 bis 18, **dadurch gekennzeichnet, dass** ein Messkegel mit einem Winkel α mit 30 bis 60 Bogenminuten, eine Höhe h im Wesentlichen gleich 0,09 m, eine Richtung D mit einem Winkel β von 89^{+/-0,5°} in Bezug zur Normalen der Fahrbahn C gewählt werden.

20. Verfahren nach Anspruch 19, **dadurch gekennzeichnet, dass** in einer Zone Z, die sich in Bezug zur Lokalisierung des Beobachters in einem durchschnittlichen Abstand d von 3,3 m befindet, die Luminanz gemessen wird.

21. Fahrzeug (2) zum Messen der Luminanz auf einer Fahrbahnoberfläche, das speziell für den Einsatz des Verfahrens nach einem der Ansprüche 1 bis 19 bestimmt ist, das:
- derart angeordnet ist, dass es geeignet ist, sich auf und entlang der Fahrbahn C zu verschieben oder verschoben zu werden;
- derart angeordnet ist, dass es Mittel (1) zum Messen der Luminanz trägt, die einen breiter als normal gewählten Messkegel α haben, d.h. größer als 2 Bogenminuten in der Vertikalebene und als 20 Bogenminuten in der Horizontalebene, die in Bezug zu der Fahrbahn C in einer weniger hoch als normal gewählten Höhe h angeordnet werden, d.h. unter 1,5 m, und in Bezug zur Lokalisierung des Beobachters in eine Richtung D ausgerichtet werden, die es ermöglichen, die Luminanz in einer gewissen Zone Z zu messen, die sich in Bezug zur Lokalisierung des Beobachters in einem kürzeren Abstand als normalerweise, d.h. unter 60 m, befindet;
- wobei die Mittel (1) zum Messen der Luminanz derart angeordnet sind, dass sie bei der Verschiebung des Fahrzeugs (2) geeignet sind, eingesetzt zu werden, um eine Messung der Luminanz in der gewissen Zone Z der Fahrbahn C in Übereinstimmung mit dem gewählten Messkegel α, der gewählten Höhe h und der gewählten Messrichtung D durchzuführen,
**dadurch gekennzeichnet, dass**
- es Stabilisierungsmittel (4) umfasst, die in Form eines Tragschlittens (4a) vorhanden sind, der auf der Fahrbahn C mit Rädern oder dergleichen (4b) aufliegt, umfassend Mittel zur Basisstabilisierung, die geeignet sind, auf die Mittel (1) zum Messen der Luminanz einzuwirken, die geeignet sind, die Höhe h und die Messrichtung D der Mittel (1) zum Messen der Luminanz ungeachtet des Fahrbahnzustands C im Wesentlichen konstant und vordefiniert zu halten.

22. Fahrzeug (2) nach Anspruch 21, **dadurch gekennzeichnet, dass** die Mittel (1) zum Messen der Luminanz einen Messkegel α zwischen 12 Bogenminuten und 120 Bogenminuten haben, dass diese Mittel (1) zum Messen der Luminanz in Bezug zur Fahrbahn C auf einer Höhe h zwischen 0,02 m und 0,5 m angeordnet werden, und dass die Mittel (1) zum Messen der Luminanz in Bezug zur Lokalisierung des Beobachters in eine Richtung D ausgerichtet werden, die es ermöglicht, die Luminanz in einer gewissen Zone Z zu messen, die sich in Bezug zur Lokalisierung des Beobachters in einem Abstand d zwischen 1 m und 20 m befindet.

23. Fahrzeug (2) nach einem der Ansprüche 21 und 22, **dadurch gekennzeichnet, dass** die Basisstabilisierungsmittel mechanisch und/oder elektronisch funktionieren.

24. Fahrzeug (2) nach einem der Ansprüche 21 bis 23, **dadurch gekennzeichnet, dass** die Mittel (1) zum Messen der Luminanz geeignet sind, kontinuierlich zu funktionieren.

25. Fahrzeug (2) nach einem der Ansprüche 21 bis 23, **dadurch gekennzeichnet, dass** die Mittel (1) zum Messen der Luminanz geeignet sind, diskontinuierlich zu funktionieren.

26. Fahrzeug (2) nach einem der Ansprüche 21 bis 25, **dadurch gekennzeichnet, dass** die Mittel (1) zum Messen der Luminanz geeignet sind, eingesetzt zu werden, während sich das Fahrzeug (2) auf und entlang der Fahrbahn bewegt.

27. Fahrzeug (2) nach einem der Ansprüche 21 bis 26, **dadurch gekennzeichnet, dass** die Mittel (1) zum Messen der Luminanz geeignet sind, eingesetzt zu werden, während das Fahrzeug (2) auf der Fahrbahn C steht.

28. Fahrzeug (2) nach einem der Ansprüche 21 bis 27, **dadurch gekennzeichnet, dass** es ferner Mittel zur Anpassung der Messrichtung D der Mittel (1) zum Messen der Luminanz umfasst, die auf die kommenden Kurven der Fahrbahn reagieren.

29. Fahrzeug (2) nach einem der Ansprüche 21 bis 28, **dadurch gekennzeichnet, dass** es auch Mittel zur Satellitengeolokalisierung umfasst, die geeignet sind, die Messhilfsmittel (1) in Bezug zur Fahrbahn C zu positionieren.

30. Fahrzeug (2) nach einem der Ansprüche 21 bis 29, **dadurch gekennzeichnet, dass** die Mittel (1) zum Messen der Luminanz geeignet sind, die Luminanz in drei Querzonen der Fahrbahn C gleichzeitig zu messen.

31. Fahrzeug (2) nach einem der Ansprüche 21 bis 30, **dadurch gekennzeichnet, dass** es auch Mittel (7) zum Messen der Horizontalbeleuchtung der Fahrbahn C trägt.

32. Fahrzeug (2) nach Anspruch 31, **dadurch gekennzeichnet, dass** die Mittel (7) zum Messen der Beleuchtung geeignet sind, die Beleuchtung in drei Querzonen der Fahrbahn C gleichzeitig zu messen.

33. Fahrzeug (2) nach einem der Ansprüche 21 bis 32, **dadurch gekennzeichnet, dass** es auch Mittel zum Anzeigen und/oder zum Drucken und/oder zum Aufzeichnen der Luminanzmessungen und der Daten zur Fahrbahn und gegebenenfalls der durchgeführten Beleuchtungsmessungen und gegebenenfalls der Daten zum gewählten Messkegel α, zur gewählten Höhe h und zur gewählten Messrichtung D trägt.

## Claims

1. Method for measuring the luminance of a road surface, wherein:
- luminance measurement means (1) having a certain measurement cone α are provided,
- the luminance measurement means (1) are placed relative to the road C at a certain height h and are oriented in a certain measurement direction D relative to the location of the observer,
- the luminance measurement means (1) are used to measure the luminance of a certain region Z of the road C determined by the certain measurement cone α, the certain height h, and the certain measurement direction D, at a certain distance d from the location of the observer,
where, in combination:
- luminance measurement means (1) are selected that have a measurement cone α chosen to be larger than normal, meaning greater than 2 arcminutes in the vertical plane and 20 arcminutes in the horizontal plane, these luminance measurement means (1) are placed relative to the road C at a height h chosen to be lower than normal, meaning less than 1.5m, and they are oriented relative to the location of the observer in a direction D suitable for measuring the luminance within a certain region Z located at a shorter distance than normal relative to the location of the observer, meaning less than 60m;
- the luminance measurement means (1) are moved over and along the road C by means of a measurement vehicle (2) supporting these means (1) and, as they are moved, they are used to measure the luminance of the certain region Z of the road C corresponding to the chosen measurement cone α, the chosen height h, and the chosen measurement direction D, and
**characterized in that**
- at least during the measurements, stabilization means (4) are used, in the form of a supporting trolley (4a) resting on the road C on wheels or a similar arrangement (4b) and comprising orientation stabilization means able to stabilize at substantially constant and predefined values the height h and the measurement direction D.

2. Method according to claim 1, wherein the luminance measurement means (1) are selected to have a measurement cone α of between 12 arcminutes and 120 arcminutes, wherein these luminance measurement means (1) are placed relative to the road C at a height h of between 0.02m and 0.5m, and wherein said luminance measurement means (1) are oriented, relative to the location of the observer, in a direction D suitable for measuring the luminance within a certain region Z located at a distance d of between 1m and 20m relative to the location of the observer.

3. Method according to claim 1 or 2, wherein a luminance measurement is obtained continuously.

4. Method according to claim 1 or 2, wherein a luminance measurement is obtained discontinuously.

5. Method according to claim 4, wherein a luminance measurement is obtained discontinuously at successive predefined intervals.

6. Method according to any one of claims 1 to 5, wherein a luminance measurement is obtained while the luminance measurement means (1) are moved over and along the road C.

7. Method according to claim 6, wherein a luminance measurement is obtained while the luminance measurement means (1) are moved over and along the road C at a reduced speed that allows obtaining measurements at successive intervals.

8. Method according to any one of claims 1 to 7, wherein a luminance measurement is obtained while the luminance measurement means (1) are stopped on the road C.

9. Method according to any one of claims 1 to 8, wherein, in order to keep the height h and the measurement distance D substantially constant, the luminance measurement means (1) are place on a vehicle (2) able to move or to be moved over and along the road C and this vehicle (2) is equipped with stabilization means (4) able to stabilize at substantially constant and predefined values the height h and measurement direction D of the luminance measurement means (1).

10. Method according to any one of claims 1 to 9, wherein the measurement direction D of the luminance measurement means (1) is adapted according to upcoming bends in the road C.

11. Method according to any one of claims 1 to 10, wherein the measurement means (1) are positioned relative to the road C by satellite geolocation.

12. Method according to any one of claims 1 to 11, wherein a luminance measurement is simultaneously obtained in three transverse regions of the road.

13. Method according to any one of claims 1 to 12, wherein, when a luminance measurement is obtained of the certain region Z of the road, a measurement of the horizontal illumination of the road is obtained in a second region Z2 near the certain region Z of the luminance measurement.

14. Method according to claim 13, wherein an illumination measurement is obtained simultaneously in three transverse regions of the road C.

15. Method according to any one of claims 1 to 14, wherein the luminance measurements and the data related to the road C, and possibly the illumination measurements, are displayed and/or printed and/or recorded.

16. Method according to claim 15, wherein the data related to the chosen measurement cone α, the chosen height h, and the chosen measurement direction D, are also displayed and/or printed and/or recorded.

17. Method according to any one of claims 1 to 16, wherein processing is performed relative to the luminance measurements and the data related to the road C and possibly to the illumination measurements, and to the data related to the chosen measurement cone α, the chosen height h, and the chosen measurement direction D.

18. Method according to claim 17, wherein the processing is chosen from among the following: performance specification criteria for the road considered; numerical and/or graphical display of the measurements and data; simulation of changes to the road concerned.

19. Method according to any one of claims 1 to 18, wherein one selects a measurement cone having an angle α of 30 to 60 arcminutes, a height h substantially equal to 0.09m, and a direction D of angle β of 89^{±0.5}º relative to the normal of the road C.

20. Method according to claim 19, wherein the luminance is measured in a region Z located at an average distance d of 3.3m relative to the location of the observer.

21. Vehicle (2) for measuring the luminance of a road surface, specifically designed for implementing the method according to any one of claims 1 to 19, being:
- arranged to be suitable for moving or being moved over and along the road C,
- arranged to support the luminance measurement means (1) having a measurement cone α chosen to be larger than normal, meaning greater than 2 arcminutes in the vertical plane and 20 arcminutes in the horizontal plane, said means being placed relative to the road C at a height h chosen to be lower than normal, meaning less than 1.5m, and oriented relative to the location of the observer in a direction D suitable for measuring the luminance within a certain region Z located relative to the location of the observer at a shorter distance than normal, meaning less than 60m;
- the luminance measurement means (1) being arranged to be suitable for use, during movement of the vehicle (2), for measuring the luminance of the certain region Z of the road C corresponding to the chosen measurement cone α, the chosen height h, and the chosen measurement direction D, and
**characterized in that**
- it comprises stabilization means (4) in the form of a supporting trolley (4a) resting on the road C on wheels or a similar arrangement (4b), comprising orientation stabilization means suitable for acting on the luminance measurement means (1), able to stabilize at substantially constant and predefined values the height h and the measurement direction D of the luminance measurement means (1) regardless of the state of the road C.

22. Vehicle (2) according to claim 21, wherein the luminance measurement means (1) have a measurement cone α of between 12 arcminutes and 120 arcminutes, wherein these luminance measurement means (1) are placed relative to the road C at a height h between 0.02m and 0.5m, and wherein said luminance measurement means (1) are oriented, relative to the location of the observer, in a direction D suitable for measuring the luminance within a certain region Z located at a distance d of between 1 m and 20m relative to the location of the observer.

23. Vehicle (2) according to any one of claims 21 and 22, wherein the orientation stabilization means are mechanically and/or electronically operated.

24. Vehicle (2) according to any one of claims 21 to 23, wherein the luminance measurement means (1) are able to operate continuously.

25. Vehicle (2) according to any one of claims 21 to 23, wherein the luminance measurement means (1) are able to operate discontinuously.

26. Vehicle (2) according to any one of claims 21 to 25, wherein the luminance measurement means (1) are able to be used while the vehicle (2) is moving over and along the road.

27. Vehicle (2) according to any one of claims 21 to 26, wherein the luminance measurement means (1) are able to be used while the vehicle (2) is stopped on the road C.

28. Vehicle (2) according to any one of claims 21 to 27, further comprising means for adjusting the measurement direction D of the luminance measurement means (1) in response to upcoming bends in the road.

29. Vehicle according to any one of claims 21 to 28, further comprising satellite geolocation means suitable for positioning the measurement means (1) relative to the road C.

30. Vehicle (2) according to any one of claims 21 to 29, wherein the luminance measurement means (1) are suitable for measuring the luminance simultaneously in three transverse regions of the road C.

31. Vehicle (2) according to any one of claims 21 to 30, wherein it also supports means (7) for measuring the horizontal illumination of the road C.

32. Vehicle (2) according to claim 31, wherein the means (7) for measuring the illumination are suitable for measuring the illumination simultaneously in three transverse regions of the road C.

33. Vehicle according to any one of claims 21 to 32, wherein it also supports means for displaying and/or printing and/or recording luminance measurements and data related to the road, and possibly illumination measurements obtained, and possibly data related to the chosen measurement cone a, the chosen height h, and the chosen measurement direction D.
